# EUROPÄISCHE PATENTANMELDUNG

(11) **EP 0 965 439 A2**
(43) Veröffentlichungstag der Anmeldung: **22.12.1999**
(21) Anmeldenummer: 99111652.6
(22) Anmeldetag: 16.06.1999
(51) Int. Cl.: B29C 65/20

(54) **Verfahren und Vorrichtung zum Stumpfschweissen von Rohren aus thermoplastischem Kunststoff**

(30) Priorität: 18.06.1998 DE 19827146
(71) Anmelder: Richter, Ulrike, 36399 Freiensteinau (DE); Zappel, Dietmar, 75417 Mühlacker (DE)
(72) Erfinder: Richter, Ulrike, 36399 Freiensteinau (DE); Zappel, Dietmar, 75417 Mühlacker (DE)
(74) Vertreter: Jochem, Bernd, Dipl.-Wirtsch.-Ing.

(57) **Zusammenfassung**

Das Verfahren und die entsprechende Vorrichtung dienen zum Stumpfschweißen von Rohren aus thermoplastischem Kunststoff, deren Enden durch einen elektrischen Antriebsmotor und unelastische Kraftübertragungsglieder zum Angleichen und Anwärmen gegen ein Heizelement und dann gegeneinander gedrückt werden. Um Arbeitszeit einzusparen und möglichst kleine Schweißwülste zu erhalten, ist vorgesehen, daß der Antriebsmotor einen zum Angleichen erforderlichen Weg nach einer vorbestimmten ersten Weg-Zeit-Kurve zurücklegt und dann während einer Anwärmphase angehalten oder nur mit einer die Wulstbildung praktisch nicht beeinflussenden, geringen Vorschubgeschwindigkeit betrieben wird, und daß er beim Fügevorgang ebenfalls zunächst einen Fügeweg nach einer vorbestimmten zweiten Zeit-Weg-Kurve zurücklegt und dann während einer Abkühlphase angehalten oder nur mit einer Vorschubgeschwindigkeit betrieben wird, die wenigstens um eine Größenordnung kleiner ist als beim Fügevorgang. Während des Vorschubs kann die auf die Rohrenden ausgeübte Kraft gemessen und aus dieser und der Vorschubgeschwindigkeit ein Maß für die Viskosität des erwärmten Materials gewonnen werden. Somit besteht auch die Möglichkeit, die Vorschubgeschwindigkeit in Abhängigkeit von der Kraft oder Viskosität zu steuern.

## Beschreibung

Die Erfindung betrifft ein Verfahren zum Stumpfschweißen von Rohren aus thermoplastischem Kunststoff, deren Enden zunächst angewärmt und zum Angleichen begradigt werden und dann durch einen steuerbaren elektrischen Antriebsmotor und unter den auftretenden Kräften im wesentlichen unelastische Kraftübertragungsglieder zum Fügen stirnseitig gegeneinander gedrückt und während einer Abkühlphase aneinandergedrückt gehalten werden. Die Erfindung betrifft weiterhin eine Vorrichtung zur Durchführung eines solchen Verfahrens.

Normalerweise werden bisher die zu verschweißenden Rohrenden durch hydraulische Kraft gegen ein Heizelement und dann gegeneinander gedrückt, vgl. DE 37 20 523 C2 und DE 693 06 387 T2. Richtlinien sehen hierfür einen über der Zeit aufgetragenen bestimmten Druck- bzw. Kraftverlauf vor (Taschenbuch DVS-Merkblätter und - Richtlinien Fügen von Kunststoffen, 6. Aufl. 1995), dessen genaue Einhaltung jedoch in der Praxis große Schwierigkeiten bereitet. Das liegt u. a. daran, daß beim Verlegen von Rohrleitungen im Gelände an Steigungen und Gefälleabschnitten verhältnismäßig große, wechselnde Gewichtskräfte den verhältnismäßig kleinen vorgeschriebenen Kräften überlagert sind, die flexiblen Hydraulikleitungen Federglieder darstellen und die hydraulischen Druckerzeuger nicht in einem großen Bereich genau steuerbar sind. Selbst wenn gemäß DE 37 20 523 C2 durch einen Bewegungsfühler die Vorschubwege der Rohrenden gemessen und beim Erwärmen und Abkühlen nach bestimmten Wegen der Vorschub abgebrochen wird, kann während der Bewegungen nur ein bestimmter Druckverlauf vorgegeben werden. Bei gleichem Druckverlauf sind jedoch je nach den in der Praxis oft unterschiedlichen Rohr- und Umgebungstemperaturen, d. h. je nach der Viskosität des Materials der Rohrenden, die Vorschubgeschwindigkeiten, die Wulstbildung und die Durchdringung des Materials sehr unterschiedlich.

Wegen der genannten Nachteile der hydraulischen Antriebe sieht die WO 96/15898 als Antriebseinheit einen Elektromotor vor, der über bei den auftretenden Kräften im wesentlichen starre Kraftübertragungsglieder in Form von Schraubenspindeln und Muttern auf die Spannfutter der Rohrenden wirkt. Der Elektromotor läßt sich genauer steuern als eine hydraulische Druckquelle, und das Schraubgetriebe mit Selbsthemmung verhindert unerwünschte Auswirkungen des Gewichts der Rohre an Steigungs- und Gefälleabschnitten. Die bekannte Schweißvorrichtung mit elektromotorischem Antrieb ist aber immer noch der von den hydraulischen Anlagen vorgegebenen Kraftsteuerung verhaftet. Die Schiebe- und Andruckkräfte werden mittels Dehnmeßstreifen gemessen, und der Vorschub des Elektromotors wird dann bei jedem Schweißvorgang so gesteuert, daß die gemessenen Kräfte dem in den Richtlinien vorgeschriebenen Kraftverlauf folgen. Dieses Verfahren bedingt eine aufwendige Steuereinrichtung und führt, weil nach den Richtlinien während der gesamten Anwärm- und Abkühlphasen, also solange die Rohrenden durch Erwärmung plastisch verformbar sind, ein Andruck aufrecht erhalten werden soll, zur Bildung verhältnismäßig dicker Schweißwülste, die Strömungsverluste bewirken, bei Abwasserleitungen Verstopfungen verursachen können und im Anlagenbau die genaue Bemessung der Längenabschnitte erschweren und optisch stören. Die Aufrechterhaltung eines vorgeschriebenen Drucks während des Anwärmens und Abkühlens ist bei hydraulisch angetriebenen Schweißvorrichtungen erforderlich, um mit Sicherheit die an Steigungen und Gefälleabschnitten auftretenden Gewichtskräfte zu kompensieren und zu verhindern, daß die Rohrenden vorzeitig von dem Heizelement abheben und daß Zugkräfte auf die noch nicht abgekühlte Schweißnaht wirken.

Aus der DE-OS 40 26 711 ist eine Schweißvorrichtung mit elektromotorischem Antrieb bekannt, die sowohl über eine Kraftmeßeinrichtung als auch eine Wegmeßeinrichtung verfügt. Die Elektromotoren können wahlweise so gesteuert werden, daß entweder an den Rohrenden bestimmte Kräfte auftreten oder bestimmte Verschiebewege zurückgelegt werden. Die Kraftübertragungsglieder zwischen den Motoren und Rohrenden schließen jedoch zur Kraftmessung und Dämpfung der Rechteckimpulse der elektrischen Schrittmotoren Federn ein. Diese bleiben, wenn beim Angleichen und Fügen bestimmte Wege zurückgelegt worden sind und die Motoren anhalten, gespannt, so daß die am Ende der Bewegung auf die Rohrenden ausgeübten Kräfte weiter wirken und die Wulstbildung verstärken. Wegen der Federn ist die Drehbewegung der Motoren auch nicht proportional dem Vorschubweg der Rohrenden, sondern bei jedem Schweißvorgang, je nach den wechselnden Gewichts- und Reibungskräften sowie der bereits vorhandenen Federspannung unterschiedlich. Die Vorrichtung bedarf daher ebenfalls einer aufwendigen Steuereinrichtung.

Der Erfindung liegt die Aufgabe zugrunde, ein Verfahren der eingangs genannten Art zu schaffen, durch das unter Einhaltung der Sicherheitsstandards die Arbeitszeit pro Schweißnaht abgekürzt und die Wulstbildung verringert wird und das nur eine sehr einfache, kostengünstige Steuereinrichtung voraussetzt.

Vorstehende Aufgabe wird erfindungsgemäß dadurch gelöst, daß der elektrische Antriebsmotor derart gesteuert wird, daß er, ausgehend von einer Stellung, in der zu Beginn des Fügevorgangs beide Rohrenden in Berührung gekommen sind, nach einer vorbestimmten oder in Abhängigkeit von der zwischen den Rohrenden wirkenden axialen Kraft oder der als Quotient aus der Kraft und der Geschwindigkeit berechneten Viskosität berechneten Weg-Zeit-Kurve einen bestimmten, zum Fügen erforderlichen Weg zurücklegt und dann während der Abkühlphase mit einer Vorschubgeschwindigkeit betrieben wird, deren mittlere Größe um mindestens eine Größenordnung kleiner ist als die mittlere Geschwindigkeit während des Fügevorgangs.

Die vorgeschlagene Lösung nutzt die Erkenntnis, daß es bei einem Antrieb durch einen Elektromotor, der zumindest hinsichtlich des Vorschubwegs, vorzugsweise auch der Vorschubgeschwindigkeit, sehr genau steuerbar ist, in Verbindung mit unelastischen Kraftübertragungsgliedern nicht erforderlich ist, in der Anwärmphase und während der gesamten Abkühlphase kontrollierte Drücke aufrecht zu erhalten. Es genügt, wenn in diesen Phasen schädliche Gewichts- oder Federkräfte von der Anlagestelle am Heizelement bzw. Schweißnaht ferngehalten werden, und dies wird ohne weitere Maßnahmen allein schon durch Anhalten und, falls zusätzlich erforderlich, Blockieren oder Bremsen des Antriebsmotors erreicht. Ein Getriebe mit Selbsthemmung, wie z. B. ein Schraubgetriebe, hat ebenfalls die Wirkung, äußere Kräfte von der Anlage- bzw. Schweißstelle fernzuhalten. Es muß lediglich beim Abkühlen durch einen geringen Vorschub dafür gesorgt werden, daß nicht durch Schrumpfung Zugkräfte auf die frische Naht wirken. Durch das gesicherte Stillhalten der Rohrenden während des Abkühlens der Schweißnaht und vorzugsweise auch während des Anwärmens in Anlage am Heizelement wird die Wulstbildung verringert.

Prinzipiell kann bei Durchführung des erfindungsgemäßen Verfahrens auf das Messen der Vorschubbewegung der Rohrenden und der auf sie wirkenden Kraft sowie eine auf diese Messungen reagierende Steuereinrichtung verzichtet werden. Es genügt, die in den vorhandenen Richtlinien für die verschiedenen Rohre festgelegten Kraft-Zeit-Kurven in gleichwertige Weg-Zeit-Kurven, jedoch mit Stillstandszeiten in den Anwärm- und Abkühlphasen, umzusetzen und dann das jeweilige Steuerprogramm für den Elektromotor aufzurufen. Eine Messung der Kräfte, z. B. mittels Dehnmeßstreifen im Antriebsstrang oder durch Messung der Stromaufnahme des Motors, kann sicherheitshalber daneben immer noch durchgeführt werden, aber einfach nur zur Protokollierung oder im Notfall zur Unterbrechung des Schweißvorgangs, nicht in Verbindung mit seiner kontinuierlichen Steuerung. Man kann deshalb, wenn die Senkung der Herstellungskosten im Vordergrund steht, mit einer sehr kostengünstigen Steuereinrichtung auskommen. Sie kann auch deshalb einfach sein, weil zur Erzielung bestimmter Vorschubwege in bestimmten Zeitintervallen nur die elektrische Spannung des Motors gesteuert werden muß. Dies läßt sich leichter erreichen als eine im Zusammenhang mit einer bestimmten Kraftkurve erforderliche Steuerung der Stromstärke.

Wenn größerer Wert auf Schnelligkeit bei gewährleisteter Sicherheit gelegt wird, kann man das erfindungsgemäße Verfahren in der Weise ausführen, daß in der Abkühlphase eine ganz geringe Vorschubbewegung stattfindet, die praktisch keinen Einfluß auf die Wulstbildung hat, sondern nur dem Ausgleich der Schrumpfung und der Gewinnung von Meßwerten der durch den Vorschub bewirkten axialen Kraft dient. Man braucht hierbei zwar wieder eine Kraftmeßeinrichtung, wie z. B. Dehnmeßstreifen, und eine Zeitmeßeinrichtung, um die Vorschubgeschwindigkeit zu ermitteln, kann dann aber während der Abkühlphase mit dem Quotienten aus der Kraft und der Vorschubgeschwindigkeit ein Maß für die momentane Viskosität des Materials an den erwärmten Rohrenden gewinnen. Die Viskosität ist neben der Temperatur der am besten geeignete Parameter zur Bestimmung des frühestens Zeitpunkts für die Beendigung der Abkühlphase. Bei stets gleicher Vorschubgeschwindigkeit während der für die Messung benutzten Zeitintervalle kann auch unmittelbar der Anstieg der auf die Rohrenden ausgeübten axialen Kraft auf einen bestimmten Maximalwert das Signal zum Beenden der Abkühlphase liefern.

Die im wesentlichen zu Meßzwecken während der Dauer der Abkühlphase ausgeführte Vorschubbewegung beeinflußt die Wulstbildung und die Qualität der Schweißnaht praktisch nicht oder nur unwesentlich, weil bei einem mit einer Wegsteuerung versehenen Elektromotor die Möglichkeit besteht, mit beliebigen zeitlichen Intervallen Vorschubwege auszuführen, die nur wenige µm betragen.

Auch in der kurzen Zeitspanne des Fügens, unmittelbar nachdem die beiden erwärmten Rohrenden zusammengebracht worden sind und sich nunmehr beim Gegeneinanderdrücken ihre Materialien durchdringen, gestattet das vorgeschlagene Verfahren eine wesentlich gleichmäßigere Arbeitsqualität als die bisher bekannten Verfahren, bei denen man lediglich bestrebt war, während der Fügezeit einen bestimmten Druckaufbau zu erzielen. Dieser läßt sich in der Praxis ohnehin nicht in der von den Richtlinien vorgesehenen Form einer über der Zeit aufgetragenen, geradlinig ansteigenden Druckkurve realisieren, weil sich in der Anfangsphase wegen des noch sehr heißen, weichen Materials ein Druck nur sehr langsam aufbauen kann. Es besteht daher die Gefahr, daß bei der bekannten Drucksteuerung infolge der in der Praxis unvermeidlichen Temperaturschwankungen mal mehr und mal weniger Material an jedem der beiden Rohrenden in einen nach radial innen und außen vorquellenden Wulst verdrängt wird und sich dementsprechend auch mal weniger und mal mehr Material zwischen diesen beiden Wülsten durchdringt und einen gemeinsamen Wulst bildet. Demgegenüber können sich Temperaturschwankungen wesentlich weniger auf die Wulstbildung und Durchdringung des Materials auswirken, wenn der Fügevorgang gemäß der Erfindung nach einer bestimmten Weg-Zeit-Kurve gesteuert ist. Wärmeres, weicheres Material wird dabei in derselben Zeit um dasselbe Maß zusammengedrückt wie weniger erhitztes Material mit etwas höherer Viskosität. Auf demselben Weg und in derselben Zeitspanne wird beiden Materialien auch dieselbe Möglichkeit geboten, einander zu durchdringen.

Der Fügevorgang läßt sich erfindungsgemäß noch genauer steuern, wenn die Geschwindigkeit, mit der die erwärmten Rohrenden gegeneinandergedrückt werden, in Abhängigkeit von der schwankenden Temperatur bzw. Viskosität gesteuert wird. Aus praktischen Gründen empfiehlt es sich allerdings, für das Fügen eine bestimmte Weg-Zeit-Kurve vorzugeben und das Abkühlen dann zu beenden, wenn die wie oben beschrieben zu ermittelnde Viskosität einen bestimmten oberen Grenzwert erreicht hat.

Der erfindungsgemäße Grundgedanke läßt sich auch auf das Angleichen und Erwärmen der Rohrenden anwenden. Gesteuert nach einer vorbestimmten Weg-Zeit-Kurve können die Rohrenden gegen eine Heizplatte gerade soweit angedrückt werden, daß die ursprünglich noch vom Hobeln der Endflächen vorhandenen Ungleichmäßigkeiten mit ausreichender Sicherheit, aber ohne unnötige Wulstbildung beseitigt werden. Dann brauchen die Rohrenden nur noch zuverlässig, aber nicht mit Druck in Anlage an der Heizplatte gehalten zu werden. Die Ausdehnung des Materials mit zunehmender Erwärmung sorgt ohnehin für einen gewissen Andruck. Bei den bekannten Schweißvorrichtungen entsteht jedoch regelmäßig ein unnötig großer und später die Strömung im Rohr störender Wulst durch zwei Faktoren. Erstens muß man aus Sicherheitsgründen bei hydraulischen Antrieben einen zwar abgesenkten, aber immer noch verhältnismäßig hohen Druck während der gesamten Anwärmphase aufrecht erhalten, weil sich beim Druck Null das Rohrende von der Heizplatte lösen könnte, im Gelände verhältnismäßig große Schwerkräfte und Reibungskräfte auf die Rohre wirken und die Drucksteuerung verhältnismäßig ungenau ist. Zweitens muß man auch wiederum aus Sicherheitsgründen den Andruck der Rohrenden gegen die Heizplatte übermäßig lange aufrecht erhalten, weil man wegen unterschiedlicher Rohr- und Umgebungstemperaturen nicht genau weiß, wann die Rohrenden auf einem ausreichenden Längenabschnitt auf die vorgesehene Temperatur aufgeheizt sind.

Die Erfindung gestattet es, ohne Verlust an Sicherheit den Andruck der Rohrenden gegen die Heizplatte wesentlich zu verringern, weil die sehr schnell und sehr genau arbeitende Wegmessung und Steuerung des elektromotorischen Antriebs, der auch praktisch keine Elastizität enthält, die Anlage der Rohrenden an der Heizplatte gewährleistet. Außerdem kann durch einen minimalen Vorschub während der Anwärmzeit die Vorschubkraft gemessen und aus dem Quotienten von Kraft und Vorschubgeschwindigkeit die momentane Viskosität ermittelt werden. Sobald diese einen bestimmten unteren Grenzwert erreicht hat, kann man die Anwärmphase beenden. Im Interesse der Gleichmäßigkeit der Erwärmung der Rohrenden sollte man die Anwärmphase in diesem Zeitpunkt auch abbrechen, denn unabhängig von der Anfangstemperatur der Rohre, der Umgebungstemperatur und der unterschiedlichen Dauer der Anwärmzeit ist genau in diesem Moment eine bestimmte Viskosität erreicht, die für den anschließenden Fügevorgang optimal ist.

Wenn verhältnismäßig gleichmäßige Temperaturen vorausgesetzt werden können, genügt die Durchführung des erfindungsgemäßen Verfahrens in der Weise, daß nach dem Angleichen einfach nur der elektrische Antriebsmotor angehalten wird. Da er normalerweise über ein Schraubgetriebe auf die die Rohrenden haltenden Spanneinrichtungen wirkt, verhindert schon die Selbsthemmung im Schraubgetriebe, daß äußere Kräfte die Rohrenden von der Heizplatte wegziehen können. Sicherheitshalber kann zusätzlich während der Anwärmzeit eine sehr geringe Vorschubgeschwindigkeit vorgegeben sein, die im Gegensatz zur Anpressung der Rohrenden gegen die Heizplatte mit dem in den Richtlinien vorgesehenen Mindestdruck praktisch keine oder nur wesentlich geringere Auswirkungen auf die Wulstbildung hat.

Das neue Verfahren eignet sich auch für eine Anwendung in Verbindung mit Heizeinrichtungen, bei denen die Rohrenden durch Infrarotstrahler aufgeheizt werden. Auch bei einer solchen Erwärmung kann durch Vorschieben der Rohrenden gegen eine Platte oder gegeneinander und Messung der bei einer bestimmten Vorschubgeschwindigkeit benötigten Kraft die momentan erreichte Viskosität ermittelt und in Abhängigkeit von dieser der weitere Vorschub gesteuert oder beendet werden.

In einer anderen bevorzugten Ausgestaltung der Erfindung ist die Dauer der Anwärmphase, während der der Elektromotor angehalten wird, in Abhängigkeit von der Anfangstemperatur der Rohrenden und/oder der Umgebungstemperatur steuerbar. Auf diese Weise sorgt man für konstante Ausgangsbedingungen vor Ausführung des vorprogrammierten Fügewegs.

In noch einer weiteren bevorzugten Ausführung der Erfindung wird während der Abkühlphase kontinuierlich oder in bestimmten zeitlichen Intervallen die Temperatur der Schweißnaht gemessen und nach Erreichen einer bestimmten Mindesttemperatur die Verbindung zwischen dem Antriebsmotor und den Rohrenden gelöst. Auch durch diese Maßnahme kann die insgesamt für einen Schweißvorgang benötigte Zeitdauer minimiert werden.

Die praktisch verfügbaren Weg- oder Drehwinkelgeber in Verbindung mit der programmierbaren Vorschubsteuerung des Antriebsmotors lassen steuerbare Vorschubschritte im µ-Bereich zu, während die die Wulstbildung beeinflussenden Vorschubwege beim Angleichen im Bereich von zehntel Millimetern und beim Fügen im Bereich von Millimetern liegen. Es hat deshalb auf die Wulstbildung praktisch keinen Einfluß und kommt im wesentlichen einem vollständigen Anhalten gleich, wenn während der Anwärmphase und während der Abkühlphase die Vorschubgeschwindigkeit jeweils auf einen um eine oder mehrere Größenordnungen niedrigeren Wert als in der vorangegangenen Angleichphase bzw. Fügedruck-Aufbauphase abgesenkt wird.

Es versteht sich, daß ebenfalls eine erfindungsgemäße Steuerung des Schweißvorgangs möglich ist, wenn die Kraftübertragungsglieder zwar ein elastisches Glied enthalten, dessen Spannung aber auf einem im Vergleich zum Angleichweg und Fügeweg so kurzen Weg auf eine unwirksame Größe abfällt, daß es nach dem Anhalten des Antriebsmotors die Wulstbildung nur noch unwesentlich beeinflußt.

Eine zur Durchführung des erfindungsgemäßen Verfahrens geeignete Vorrichtung hat zwei relativ zueinander in Flucht ausgerichtete Rohrspanneinheiten, von denen wenigstens die eine mit einem darin eingespannten, auf Schweißtemperatur erwärmten Rohrende durch einen elektrischen Antriebsmotor über im wesentlichen unelastische, mechanische Antriebsorgane in Fluchtrichtung verfahrbar und gegen ein in der anderen Rohrspanneinheit eingespanntes, auf Schweißtemperatur erwärmtes Rohrende andrückbar ist, und ist dadurch gekennzeichnet, daß der Antriebsmotor oder die im wesentlichen unelastischen Antriebsorgane mit einem Drehwinkel- oder Weggeber versehen sind und die Vorschubgeschwindigkeit der Rohrspanneinheit zumindest während des gegenseitigen Andrucks der Rohrenden beim Fügen, vorzugsweise aber auch beim vorhergehenden Andruck der Rohrenden gegen eine Heizplatte zum Zwecke des Angleichens und Anwärmens nach einer vorbestimmten Weg-Zeit-Kurve oder in Abhängigkeit von der während des Fügevorgangs bzw. während des Andrückens gegen eine Heizplatte gemessenen, auf die Rohrenden wirkenden axialen Kraft oder der als Quotient aus Kraft und Geschwindigkeit berechneten Viskosität steuerbar ist.

Die Erfindung wird nachstehend anhand von Zeit-Weg-Diagrammen und einer Darstellung einer Schweißvorrichtung näher erläutert. Es zeigen:
- Fig. 1 - 3: Zeit-Weg-Diagramme verschiedener Bewegungsphasen eines Arbeitsvorgangs zum Verschweißen von zwei Rohrenden;
- Fig. 4: ein Zeit-Weg-Diagramm über die gesamte Bewegung eines Arbeitsvorgangs und
- Fig. 5: eine schematische Darstellung einer Schweißvorrichtung zum Verschweißen von Rohrenden.

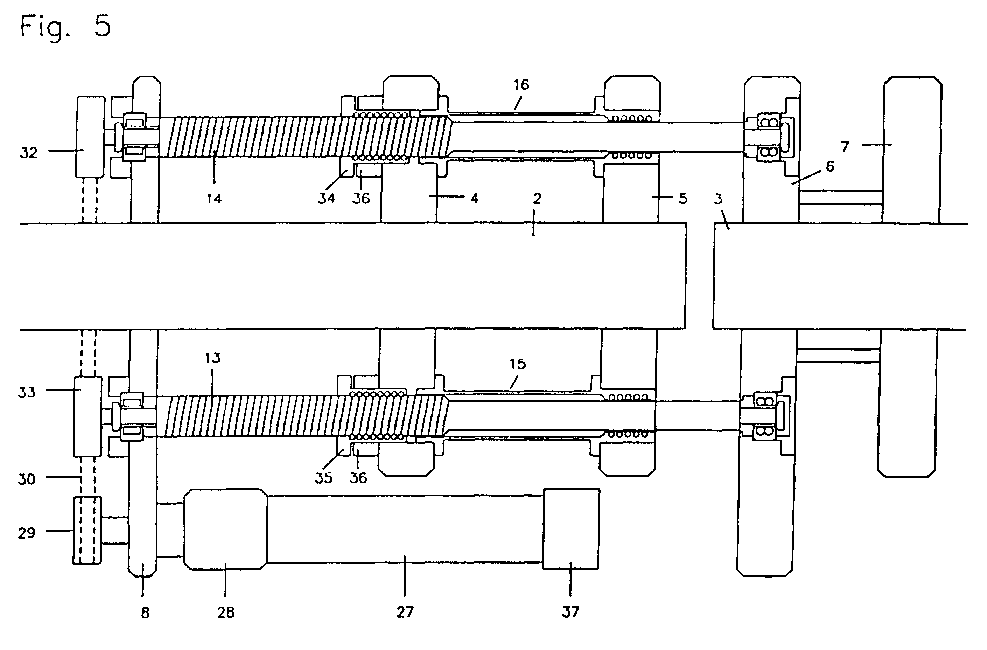

Die nachfolgende Beschreibung von Weg-Zeit-Diagrammen setzt eine Vorrichtung voraus, wie sie in Fig. 5 gezeigt und in der WO 96/15898 beschrieben ist, wobei jedoch im Ausführungsbeispiel der Erfindung nicht eine Regelung der Vorschubkraft in Abhängigkeit der Meßwerte einer Kraft-, Druck- oder Drehmoment-Meßeinrichtung erfolgt, sondern die Vorschubgeschwindigkeit entsprechend einem vor Beginn des Arbeitsvorgangs festliegenden Steuerprogramm gesteuert wird. Dieses Programm in Form einer ersten Weg-Zeit-Kurve für die Vorschubbewegung beim Andrücken der Rohrenden gegen eine Heizplatte zum Zwecke des Angleichens und Anwärmens sowie einer zweiten Weg-Zeit-Kurve für das gegenseitige Andrücken der erwärmten Rohrenden zum Zwecke des Fügens könnte so gestaltet werden, daß sich unter der Voraussetzung einer bestimmten Temperatur an den Rohrenden derselbe Druckverlauf ergibt, der nach den bisher gültigen Arbeitsregeln vorgesehen ist. Zur Vermeidung einer übermäßigen Wulstbildung werden die Weg-Zeit-Kurven jedoch vorzugsweise so gestaltet, daß während der Anwärmphase sowie nach einem mit einem definierten Geschwindigkeitsverlauf erzeugten, exakten Vorschubweg zum Fügen der Antriebsmotor im wesentlichen angehalten wird, so daß praktisch sofort die Wulstbildung infolge der Vorschubkraft aufhört.

Die Vorrichtung zum Stumpfschweißen von Rohren aus thermoplastischen Kunststoffen nach Fig. 5 weist zwei Rohrspanneinheiten zum Spannen von zwei miteinander zu verbindenden Rohrenden 2, 3 auf, deren eine aus zwei axial fest miteinander verbundenen Rohr-Spannelementen 4, 5 und deren andere ebenfalls aus zwei fest miteinander verbundenen Rohr-Spannelementen 6, 7 besteht. Die Spannelemente 6, 7 sind über nicht gezeigte Längsträger mit einer Endwand 8 am anderen Ende der Spannvorrichtung starr verbunden.

Der Antrieb der Spannelemente 4, 5 relativ zu den Spannelementen 6, 7, erfolgt durch einen Motor 27. Dieser ist mitsamt einem angeflanschten Getriebe 28 in achsparalleler Lage neben Gewindespindeln 13, 14 an der Endwand 8 befestigt und treibt eine Zahnriemenscheibe 29 an, die das Drehmoment über einen Zahnriemen 30, der über mehrere Umlenk- und Spannrollen 31 läuft, auf drehfest mit den Gewindespindeln 13, 14 verbundene Riemenscheiben 32, 33 überträgt.

Die Gewindespindeln 13, 14 sind im Spannelement 6 und in der Endwand 8 mittels Wälzlagern radial gelagert. Das Axiallager der Gewindespindeln 13, 14 befindet sich im Spannelement 6. Dieses sowie das mit ihm über Bolzen axial fest verbundene Spannelement 7 sind z. B. auf dem mit 3 bezeichneten Ende eines bereits verlegten langen Rohrstrangs festgeklemmt. Die auf dem Ende 2 eines an den Rohrstrang 3 anzuschweißenden Rohrstücks festgeklemmten Spannelemente 4 und 5 sind durch Distanzbüchsen 15, 16 starr miteinander verbunden, welche koaxial zu den durch sie hindurchgeführten Gewindespindeln 13, 14 angeordnet sind. Der Gewindeabschnitt der Gewindespindeln 13 und 14 reicht nur soweit wie der Verfahrweg des Spannelements 4. Das Spannelement 5 ist lediglich mittels Wälzkörpern axial verschieblich auf einem nicht mit Gewinde versehenen vorderen Teil der Gewindespindeln 13, 14 axial verschieblich geführt.

Die Gewindespindeln 13, 14 sind im Ausführungsbeispiel nach Fig. 5 Kugelumlaufspindeln, die mit drehfest am Spannelement 4 befestigten Kugelumlaufmuttern 34, 35 zusammenwirken. Letztere übertragen die auf sie durch die Gewindespindeln 13, 14 ausgeübten Druckkräfte allerdings nicht direkt auf das Spannelement 4 und das mit diesem über die Distanzbüchsen 15', 16' verbundene Spannelement 5, sondern unter Zwischenschaltung jeweils einer Kraftmeßeinrichtung 36, welche im Beispielsfall die Form eines Ringes hat, der mit zwei diametral gegenüberliegend angeordneten Vorsprüngen am Spannelement 4 und mit zwei um 90° zu diesen Vorsprüngen versetzten weiteren axialen Vorsprüngen jeweils an einer Kugelumlaufmutter 34 bzw. 35 abgestützt ist und jeweils zwischen zwei Vorsprüngen Dehnungsmeßstreifen trägt. Bei Druckbelastung biegen sich die vier Abschnitte des Ringes zwischen den Vorsprüngen, und die mittels der Dehnungsmeßstreifen gemessene elastische Verformung des Ringes ist ein Maß für die von dem Ring auf das Spannelement 4 übertragene Druckkraft. Die Anordnung von vier Dehnungsmeßstreifen, die in Form einer Wheatstone-Brücke geschaltet sind, ergibt ein genaueres Meßergebnis als mit nur einem einzigen Dehnungsmeßstreifen an einem durch die von einer Kugelumlaufmutter 34, 35 auf das Spannelement 4 übertragenen Kraft elastisch verformbaren Zwischenglied.

Es versteht sich, daß die Meßeinrichtung 36 auch an einem anderen mechanischen Antriebsorgan der verfahrbaren Rohrspanneinheit 4, 5 angeordnet und z.B. auch als Druckmeßeinrichtung oder Drehmomentmeßeinrichtung funktionieren kann. In der in Fig. 5 gezeigten Anordnung der Meßeinrichtung 36 unmittelbar zwischen der Rohrspanneinheit 4, 5 und dem direkt vorgelagerten Antriebsorgan 34, 35 besteht allerdings der Vorteil, daß gerade die auf das verschiebliche Rohrende 2 wirkende äußere Kraft gemessen wird, und keine Reibungskräfte mehr berücksichtigt werden müssen.

Wie weiterhin aus Fig. 5 ersichtlich, ist am Elektromotor 27 ein Inkrementalgeber 37 angebracht, welcher den Drehweg des Läufers des Motors in kleinen Winkelschritten erfaßt, wobei jedem Winkelschritt ein sehr kleiner Verschiebeweg der Rohrspanneinheit 4, 5 entspricht. Mit dieser Wegmeßeinrichtung und einem Taktgeber in der Steuer- und Regeleinrichtung des Motors 27 besteht die Möglichkeit, die Relativbewegung und Geschwindigkeit der Rohrenden 2, 3 beim Angleichen, Anwärmen, Fügen und Abkühlen genau zu erfassen.

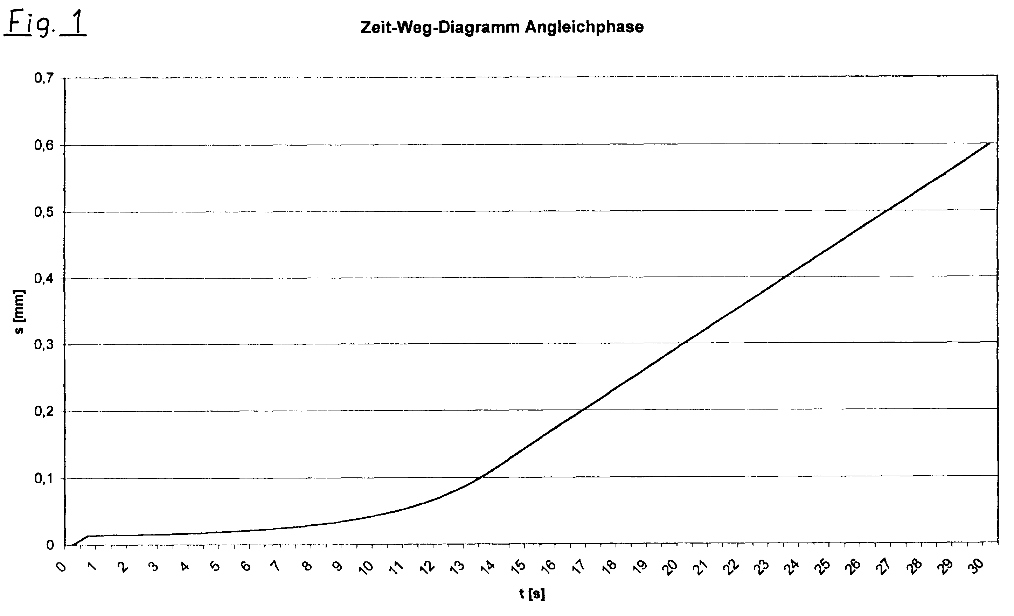

Fig. 1 zeigt ein Zeit-Weg-Diagramm für die Angleichphase, in der durch Andruck und Vorschub der Rohrenden gegen eine beidseitig planparallel ebene Heizplatte evtl. noch vorhandene stirnseitige Unebenheiten, die aus dem vorangehenden Abschneiden der Rohrenden resultieren können, beseitigt werden. Wie ersichtlich, wird zunächst, weil die Rohrenden noch nicht genügend erwärmt sind, mit einer sehr geringen Vorschubgeschwindigkeit gearbeitet, die dann allmählich auf einen konstanten Wert gesteigert wird, der sich im rechten Teil des Diagramms als geradlinig schräg ansteigende Kurve ausdrückt. Die Angleichphase dauert etwa 1/2 Min., und während dieser Zeit werden die Rohrenden, gerechnet von der Stellung, in der sie zur Anlage an die Heizplatte kommen, um z.B. 0,5 oder 0,6 mm gegen die Heizplatte vorgeschoben.

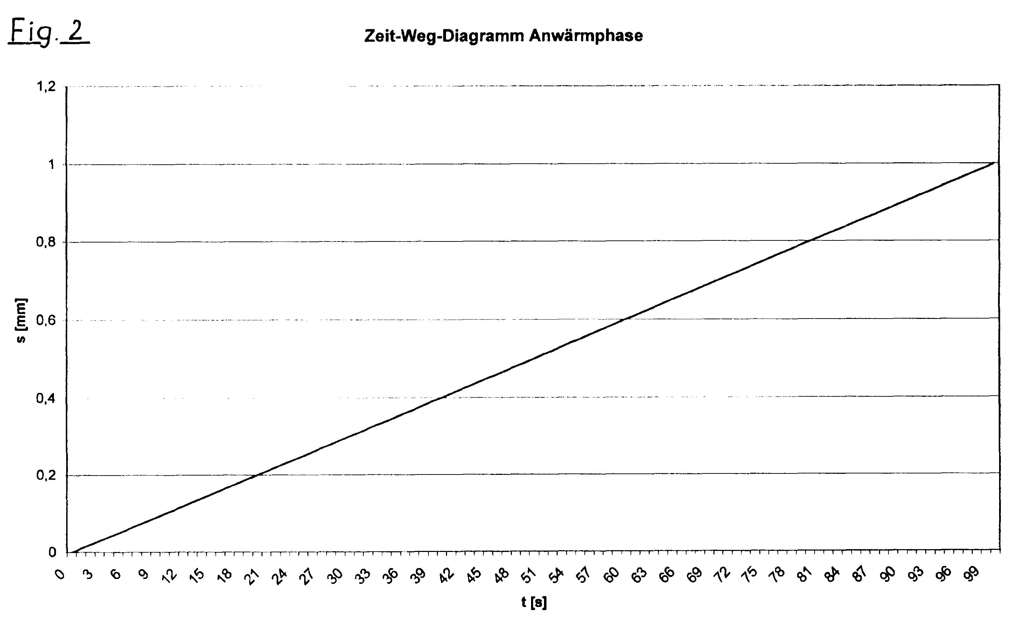

Die in Fig. 1 gezeigte Kurve findet ihre Fortsetzung im Weg-Zeit-Diagramm nach Fig. 2 für die Anwärmphase. Im Beispielsfall ist für diese etwa 1 1/2 Min. dauernde Phase ein mit konstanter Vorschubgeschwindigkeit ausgeführter Vorschubweg von 1 mm vorgesehen. Wie bereits erwähnt, wird es vorgezogen, in dieser Phase den Antriebsmotor anzuhalten und dadurch sowie ggf. zusätzliche Brems- und Halteeinrichtungen die Rohrspanneinheiten relativ zur Heizplatte unabhängig von den auf die Rohrenden wirkenden äußeren Kräfte festzulegen. Dann bleibt der für die Wärmeübertragung erforderliche Kontakt mit der Heizplatte erhalten, aber es findet keine zusätzliche Wulstbildung statt.

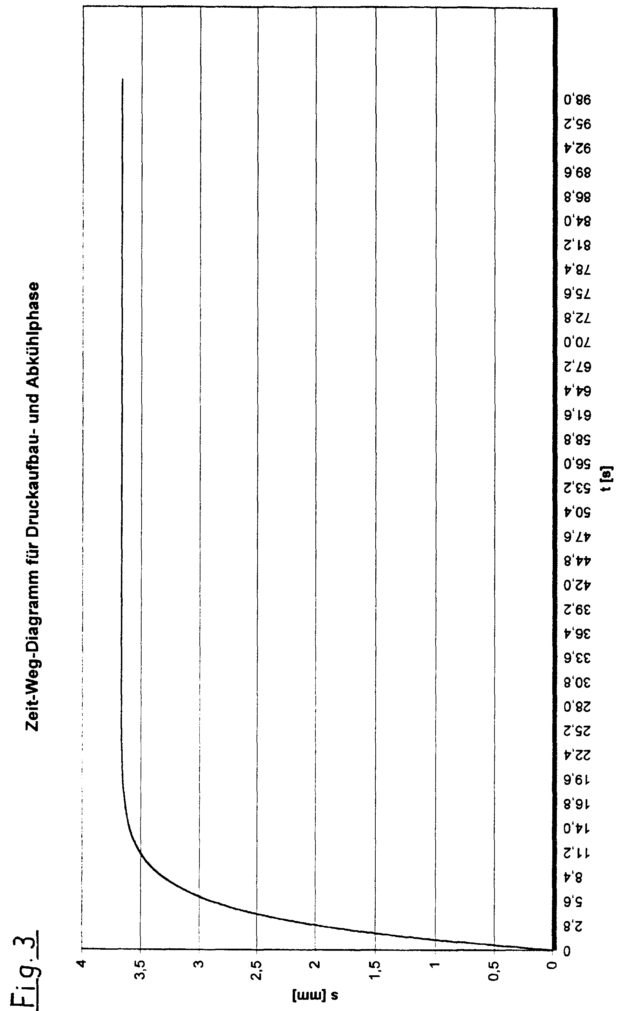

Das in Fig. 3 gezeigte Weg-Zeit-Diagramm charakterisiert die Vorschubbewegung der Rohrenden nach der Entfernung der Heizplatte ab dem Beginn ihrer gegenseitigen Berührung. Im Ausführungsbeispiel wird fast der gesamte vorgesehene Fügeweg mit annähernd gleichbleibender, hoher Vorschubgeschwindigkeit innerhalb weniger Sekunden zurückgelegt. Anschliessend findet ebenfalls während weniger Sekunden ein weiches Abbremsen des Vorschubs auf Null statt. Im Beispielsfall wurde beim Fügen insgesamt ein Weg von etwas mehr als 3,5 mm zurückgelegt. Nach dem Anhalten des Antriebsmotors behalten die beiden Rohrspanneinheiten - abgesehen vom Ausgleich der Schrumpung durch Abkühlung - ihre gegenseitige Stellung noch während einer Zeitdauer von etwa 1 1/2 Min. oder länger bei und nehmen dabei alle äußeren Kräfte auf, so daß die mit einem genau definierten Wulst gebildete Schweißnaht während der nach dem Anhalten des Antriebsmotors stattfindenen Abkühlphase von äußeren Zug- und Druckkräften entlastet ist. Es bedarf demnach nicht der Aufrechterhaltung von Druckkräften, um in der Abkühlphase schädliche Zugkräfte auf die Schweißnaht zu vermeiden, und mit der Vermeidung der Druckkräfte entfällt auch eine zusätzliche Wulstbildung nach Ausführung des genau definierten Fügewegs.

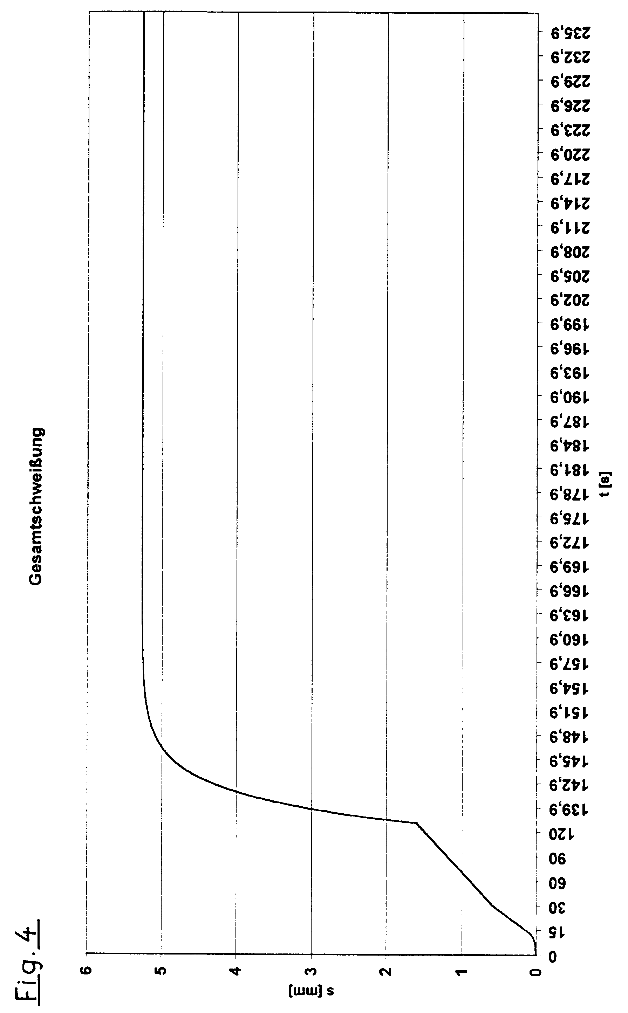

Fig. 4 zeigt eine Zusammenstellung der Diagramme nach Fig. 1 bis 3 ohne die kurze zeitliche Unterbrechung bei der Entfernung der Heizplatte. Der gesamte Angleich-, Erwärmungs- und Fügevorgang bis zur ausreichenden Abkühlung der Schweißnaht dauerte danach etwa 4 Min. Die angetriebene Rohrspanneinheit wurde in einer definierten Weg-Zeit-Kurve

## Patentansprüche

1. Verfahren zum Stumpfschweißen von Rohren aus thermoplastischem Kunststoff, deren Enden zunächst angewärmt und zum Angleichen begradigt werden und dann durch einen steuerbaren elektrischen Antriebsmotor und unter den auftretenden Kräften im wesentlichen unelastische Kraftübertragungsglieder zum Fügen stirnseitig gegeneinander gedrückt und während einer Abkühlphase aneinandergedrückt gehalten werden, **dadurch gekennzeichnet,** daß der elektrische Antriebsmotor derart gesteuert wird, daß er, ausgehend von einer Stellung, in der zu Beginn des Fügevorgangs beide Rohrenden in Berührung gekommen sind, nach einer vorbestimmten oder in Abhängigkeit von der zwischen den Rohrenden wirkenden axialen Kraft oder der als Quotient aus der Kraft und der Geschwindigkeit berechneten Viskosität berechneten Weg-Zeit-Kurve einen bestimmten, zum Fügen erforderlichen Weg zurücklegt und dann während der Abkühlphase mit einer Vorschubgeschwindigkeit betrieben wird, deren mittlere Größe um mindestens eine Größenordnung kleiner ist als die mittlere Geschwindigkeit während des Fügevorgangs.

2. Verfahren nach Anspruch 1, **dadurch gekennzeichnet,** daß während des langsamen Vorschubs in der Abkühlphase die zwischen den Rohrenden wirkende axiale Kraft gemessen und die Abkühlphase beendet wird, wenn der Quotient aus Kraft und Geschwindigkeit einen bestimmten oberen Grenzwert erreicht.

3. Verfahren nach Anspruch 1, **dadurch gekennzeichnet,** daß während der Abkühlphase kontinuierlich oder in bestimmten zeitlichen Intervallen die Temperatur der Schweißnaht gemessen und nach Erreichen einer bestimmten Mindesttemperatur die Verbindung zwischen dem Antriebsmotor und den Rohrenden gelöst wird.

4. Verfahren nach Anspruch 1, **dadurch gekennzeichnet,** daß der zum Fügen erforderliche Weg in der Endphase des Fügevorgangs mit abnehmender Geschwindigkeit ausgeführt wird.

5. Verfahren nach Anspruch 1, **dadurch gekennzeichnet,** daß der elektrische Antriebsmotor beim Anwärmen und Angleichen der Rohrenden derart gesteuert wird, daß er, ausgehend von einer Stellung, in der beide Rohrenden mit einer Heizplatte in Berührung gekommen sind, nach einer vorbestimmten Weg-Zeit-Kurve einen bestimmten, zum Angleichen erforderlichen Weg zurücklegt und dann während einer Anwärmphase mit einer Vorschubgeschwindigkeit betrieben wird, die um mindestens eine Größenordnung kleiner ist als die mittlere Geschwindigkeit während des Fügevorgangs.

6. Verfahren nach Anspruch 5, **dadurch gekennzeichnet,** daß während des langsamen Vorschubs in der Anwärmphase die auf die Rohrenden wirkende axiale Kraft gemessen und die Anwärmphase beendet wird, wenn der Quotient aus Kraft und Geschwindigkeit einen bestimmten unteren Grenzwert erreicht.

7. Verfahren nach Anspruch 1, **dadurch gekennzeichnet,** daß die Dauer der Anwärmphase in Abhängigkeit von der Anfangstemperatur der Rohrenden und/oder der Umgebungstemperatur steuerbar ist.

8. Verfahren nach Anspruch 1, **dadurch gekennzeichnet,** daß während des Angleichens, Anwärmens, Fügens und Abkühlens die auf die Rohrenden wirkende axiale Kraft gemessen und mit einer Sollwertkurve verglichen wird.

9. Vorrichtung zum Stumpfschweißen von Rohren aus thermoplastischem Kunststoff zur Durchführung des Verfahrens nach einem der Ansprüche 1 bis 8, mit zwei relativ zueinander in Flucht ausgerichteten Rohrspanneinheiten, von denen wenigstens die eine mit einem darin eingespannten, auf Schweißtemperatur erwärmten Rohrende durch einen elektrischen Antriebsmotor über im wesentlichen unelastische mechanische Antriebsorgane in Fluchtrichtung verfahrbar und gegen ein in der anderen Rohrspanneinheit eingespanntes, auf Schweißtemperatur erwärmtes Rohrende andrückbar ist, **dadurch gekennzeichnet,** daß der Antriebsmotor oder die im wesentlichen unelastischen Antriebsorgane mit einem Drehwinkel- oder Weggeber versehen und die Vorschubgeschwindigkeit der Rohrspanneinheit während des gegenseitigen Andrucks der Rohrenden nach einer vorbestimmten Weg-Zeit-Kurve oder in Abhängigkeit von der zwischen der Rohrenden wirkenden axialen Kraft oder der als Quotient aus Kraft und Geschwindigkeit berechneten Viskosität steuerbar ist.

10. Vorrichtung nach Anspruch 9, **dadurch gekennzeichnet,** daß die Rohrenden zum Erwärmen und Ausgleichen von Unebenheiten mittels der Rohrspanneinheit stirnseitig gegen eine Heizplatte andrückbar sind und auch während dieses Vorgangs die Vorschubgeschwindigkeit der Rohrspanneinheit und die Beendigung der Anwärmphase nach einer vorbestimmten Weg-Zeit-Kurve oder in Abhängigkeit von der während des Andrückens gegen die Heizplatte gemessenen, auf die Rohrenden wirkenden axialen Kraft oder der als Quotient aus Kraft und Geschwindigkeit berechneten Viskosität steuerbar sind.
